# EUROPEAN PATENT SPECIFICATION

(11) **EP 0 300 733 B1**
(45) Date of publication and mention of the grant of the patent: **05.01.1994**
(21) Application number: 88306596.3
(22) Date of filing: 19.07.1988
(51) Int. Cl.: G11B 7/24, G11B 7/26

(54) **Optical recording medium, process for preparing the same and its optical recording and reproducing system**
Optischer Aufzeichnungsträger, Verfahren zu seiner Herstellung und sein optisches Aufzeichnungs- und Wiedergabesystem
Milieu d'enregistrement optique, procédé pour le préparer ainsi que son système d'enregistrement et de reproduction optique

(30) Priority: 20.07.1987 JP 179127/87
(43) Date of publication of application: 25.01.1989
(73) Proprietor: CANON KABUSHIKI KAISHA, Tokyo (JP)
(72) Inventor: Imataki, Hiroyuki, Kawasaki-shi Kanagawa-ken (JP)
(74) Representative: Beresford, Keith Denis Lewis

(56) References cited:
- EP-A- 0 060 017
- EP-A- 0 089 874
- EP-A- 0 105 374
- EP-A- 0 120 514
- EP-A- 0 126 161

## Description

This invention relates to an optical recording medium and to a method for protecting it.

In recent years, with the progress of information-oriented society, a large number of optical recording media and recording-reproducing devices for information have been proposed which permit the recording and reproduction of optical information. Media for carrying a diversity of different forms of information can take the form of optical discs, optical cards and optical tapes. In one form of optical recording media binary information recorded in the surface shape, for example by the presence of pits (concavities) can be detected by changes in the reflectance or change in intensity of the reflected light. Such an optical recording medium comprises a preformat signal and a guide groove of previously provided on a substrate by the 2 P method, compression molding, cast molding etc, an amorphous thin film of a dye or pigment such as a cyanine type or polymethine type dye, TeOx or chalcogen which provides the optical recording layer and is deposited by vapour deposition on the substrate to permit information to be recorded and reproduced by means of light and further an optional protective substrate for protecting the above optical recording layer laminated thereon.

One such optical recording medium is an optical card which may have dimensions of for example 85.4 mm x 54.0 mm x 0.76 mm, and is very portable. However, such an optical recording medium is subject to the development of flaws when it is carried. Because of its portability an optical card is particularly susceptible to development of flaws, contamination etc which can give rise to the problems that the tracking is liable to exhibit slippage and that the C/N ratio of the reproduced signal is reduced. One method which has been proposed for solving such problems is an optical card having a protective sheet on the surface upon which the light for recording and reproduction is incident, and enabling the protective sheet which is subject to flaws and contamination to be peeled off. Another method of preventing flaws is by the provision of a hard coating layer on the surface of the optical card upon which the light for recording and reproduction is incident. However, where there is provided a protective sheet which can be peeled off there is the risk of adhesive remaining attached to the surface of the optical card where it can badly affect recording and reproduction. Furthermore, it is difficult to devise an adhesive protective sheet which both maintains its strength of adhesion at a sufficient value whilst being easy to peel off because these characteristics are mutually and antagonistic. Furthermore, where there is provided a hard coating layer, once a flaw has developed which interferes with reproduction, it is difficult to recover completely the information present on the optical card.

In one aspect the present invention provides an optical recording medium, comprising a substrate and an optical recording layer, the outer surface of the optical recording medium being covered with a protective member, characterised in that the protective member comprises a heat shrinkable material which may have been subjected to heat to bring about shrinkage thereof to bring said protective member into close contact with the optical recording medium.

According to a further aspect of the invention there is provided a method for protecting an optical recording medium, which comprises the steps of covering the outer surface of the optical recording medium with a protective member of a heat shrinkable material and heating the protective member to bring the protective member into close contact with the optical recording medium.

The optical recording medium of the invention is of simple construction, is resistant to flaws and contamination and exhibits a significant improvement in the errors which arise during recording and reproduction.

In the present invention, since the optical recording medium is to be closely covered with a protective member comprising a heat-shrinkable material, there is no such migration of adhesive or tackifier to the optical recording medium as in the prior art examples as described above, but attachment and detachment can be easily done, and also with good contact with the optical recording medium. Therefore, outer dimensions are not substantially changed from the original dimensions of the optical recording medium without damaging portability, whereby errors during recording and/or reproduction due to flaws and contamination could be avoided.

### BRIEF DESCRIPTION OF THE DRAWINGS

Fig. 1 is a schematic sectional view of an optical recording medium according to the present invention, Fig. 1 (a) showing a sectional view of the state in which a protective member comprising a heat-shrinkable material is covered and Fig. 1 (b) a sectional view of the state in which a protective member comprising a heat-shrinkable material is shrunk by heat to be covered on the optical recording medium in close contact therewith.

Fig. 2 is an illustration of the method for cutting the protective member covered in close contact with the optical recording medium.

Fig. 3 is an illustration of the method for removing the protective member covered in close contact with the optical recording medium.

### DETAILED DESCRIPTION OF THE INVENTION

The present invention is described in detail below by referring to the drawings.

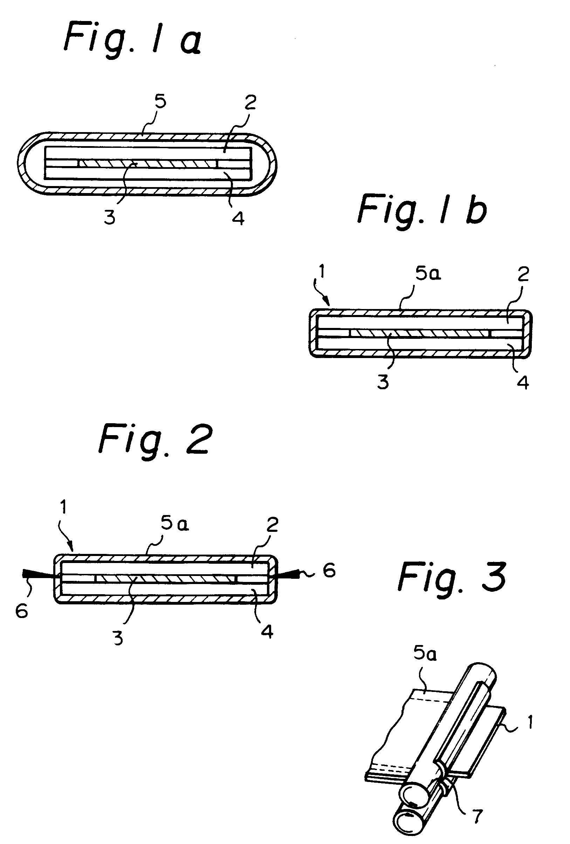

Fig. 1 shows an optical recording medium according to the present invention, Fig. 1 (a) showing a sectional view of the state in which a protective member comprising a heat-shrinkable material is covered and Fig. 1 (b) a sectional view of the state in which a protective member comprising a heat-shrinkable material is shrunk by heat to be covered on the optical recording medium in close contact therewith.

In Fig. 1, the optical recording medium 1 of the present invention comprises an optical recording medium comprising an optical recording layer 3 provided on a substrate 2 having a pregroove provided thereon and a protective layer 4 laminated optionally through an adhesive layer, having a protective member comprising a heat-shrinkable material on the outer surface thereof, followed by heating to thereby coat the heat-shrunk protective member 5a closely covered on the outer surface of the card.

As the protective member 5 comprising a heat-shrinkable material, those which can be shrunk in diameter by application of heat such as heat-shrinkable tube, etc. or those which can be shrunk by application of heat such as heat-shrinkable sheet, etc., including those obtained by such method as stretching processing of materials such as polvinyl chloride, polyethylene, polyproplene, polystyrene, polyvinylidene chloride, polyester, hydrochloric acid rubber, silicone rubber, etc.

The thickness of the protective member covering the outer surface of the optical recording medium depends on the shrinkage of the heat-shrinkable material employed, but can be controlled generally within the range of 0.01 to 5 mm. Particularly, as the protective member of the optical recording medium, thinner member with higher flaw resistance and abrasion resistance is preferred, and those with thickness of 0.01 to 1 mm may be preferably employed.

The heat applied to the protective member comprising the above heat-shrinkable material may be preferably within the range which shrinks sufficiently the protective member comprising said heat-shrinkable material and does not deleteriously affect the optical recording medium itself, for example, 50 °C to 200 °C, particularly preferably 80 °C to 170 °C.

The shrinkage of the heat-shrinkable material should be preferably about 0.8 to 0.9 when the size before heating is made 1.

Also, by selecting the material for heat-shrinkable material, various functions such as flame retardancy, solvent resistance, electroconductivity, oil resistance, thermal conductivity can be provided to give extremely preferable effects as the protective member for the optical recording medium.

When the protective member is transparent, the information of the sign on the back surface of the optical recording medium and face photography can be read.

On the other hand, when an opaque protective member is used, light resistance of the optical recording layer can be improved, whereby various kinds of printing become possible on its surface to make use as various information display or publicity medium possible.

In the following, the optical recording-reproducing system and the optical recording and/or reproducing device are to be described.

The optical recording medium of the present invention effects information recording and/or reproduction by performing information recording and/or reproduction on an optical recording medium covered with a protective member comprising a heat-shrinkable material after removal of said protective member prior to information recording and/or reproduction, and mounting a new protective member after information recording and/or reproduction.

As the method for removing the protective member, for example, as shown in Fig. 2, it can be removed by cutting the side surface or the end surface with a cutter 6 and winding up with tacky rollers 7 as shown in Fig 3.

As the method for mounting the protective member, the protective member comprising a heat-shrinkable material can be previously formed into a bag or tube greater than the optical recording medium, and an optical recording medium can be placed into this, followed by shrinkage by heating by means of hot air or hot rollers to effect mounting by close contact of the protective member with the optical recording member.

When the protective member comprising a heat-shrinkable material to be covered on the optical recording medium in the present invention is transparent, recording and reproduction of information may be conducted without removing the protective member.

Further, in the present invention, without providing the protective substrate on the optical recording layer formed on the substrate, a protective member comprising a heat-shrinkable material may be also covered thereon. In this case, due to the absence of the protective substrate which inhibits formation of pits, recording sensitivity is improved.

The following effects can be obtained from the optical recording medium, its recording and reproducing method and the method for production thereof of the present invention as described above.
(1) Since the protective member comprises a heat-shrinkable material without use of an adhesive, etc., attachement to and detachment from the optical recording medium can be easily done, and also there is no residual adhesive on the optical recording medium surface after peeled off, whereby errors during recording and reproduction can be prevented.
(2) Since the protective member is covered in close contact with the optical recording medium through its tension, it will not be peeled off unless the protective member is cut open, and also since it is closely contacted with the optical recording medium, there is substantially no change in size of the optical recording medium to give also good portability.

The present invention is described in more detail by referring to Example.

### Example 1

As the optical recording medium was employed one obtained by coating a polymethine type dye with a thickness of 0.1 µ as the optical recording layer on a transparent acrylic resin substrate equipped with a pregroove of 85 mm x 54 mm x 0.4 mm, followed by lamination of a black acrylic resin plate of 85 mm x 54 mm x 0.3 mm.

The optical recording medium was covered with a 1 mm thick heat-shrinakble tube (St-190HT, produced by Shinetsu Silicon) and subjected to heat shrinkage by heating with hot air (ca. 170 °C) by a handy dryer to be covered with the protective member closely contacted on the outer surface.

The optical recording medium covered with the protective member and the optical medium not covered were handled under ordinary circumstances in a pocket for one month, and then the protective member was removed and the informations previously recorded on both were reproduced for comparison with respect to the error rate of the card due to flaws, contamination. As the result, when used without covering with the protective member, the value was extremely bad as 3 x 10⁻¹, while when used with the protective member of the present invention, the value was substantially the same as the initial value of 1 x 10⁻⁴.

## Claims

1. An optical recording medium, comprising a substrate (2) and an optical recording layer (3) the outer surface of the optical recording medium being covered with a protective member, characterised in that the protective member (5) comprises a heat shrinkable material which may have been subjected to heat to bring about shrinkage thereof to bring said protective member into close contact with the optical recording medium.

2. An optical recording medium according to claim 1, wherein the protective member (5) has a thickness of 0.01 mm to 5 mm.

3. An optical recording medium according to claim 2, wherein the protective member (5) has a thickness 0.01 mm to 1 mm.

4. An optical recording medium according to any preceding claim, wherein the protective member (5) undergoes shrinkage when heated to a temperature of 50°C to 200°C.

5. An optical recording medium according to claim 4, wherein the protective member (5) undergoes shrinkage when heated to a temperature of 80°C to 170°C.

6. An optical recording medium according to any preceding claim, wherein the protective member (5) comprises a heat shrinkable sheet obtained by stretch processing of at least one of polyvinyl chloride, polyethylene, polypropylene, polystyrene, polyvinylidene chloride, polyester, rubber hydrochloride, silicone resin.

7. An optical recording medium according to any preceding claim, wherein a protective substrate (4) is provided on the recording layer (3) of the optical recording medium.

8. A recording medium according to any preceding claim, wherein said optical recording medium is an optical card.

9. A method for protecting an optical recording medium, which comprises the steps of covering the outer surface of the optical recording medium with a protective member (5) of a heat shrinkable material and heating the protective member (5) to bring said protective member into close contact with the optical recording medium.

10. A method according to claim 9, wherein the heating temperature is 50°C to 200°C.

11. A method according to claim 10, wherein the heating temperature is 80°C to 170°.

12. A method according to claim 9, 10 or 11 wherein the optical recording medium is an optical card.

13. A method according to any of claims 9 to 12 when carried out before recording of information on the medium or before reproduction of information from the medium.

14. A method according to any of claims 9 to 12, when carried out after recording the information on the medium or reproduction of information from the medium.

## Patentansprüche

1. Optischer Aufzeichnungsträger mit einem Substrat (2) und einer optischen Aufzeichnungsschicht (3), wobei die äußere Oberfläche des optischen Aufzeichnungsträgers mit einem Schutzteil bedeckt ist, dadurch gekennzeichnet, daß das Schutzteil (5) ein aufschrumpfbares Material umfaßt, das Wärme ausgesetzt worden sein kann, um seine Schrumpfung Zu veranlassen, damit das erwähnte Schutzteil mit dem optischen Aufzeichnungsträger in enge Berührung gebracht wird.

2. Optischer Aufzeichnungsträger nach Anspruch 1, bei dem das Schutzteil (5) eine Dicke von 0,01 mm bis 5 mm hat.

3. Optischer Aufzeichnungsträger nach Anspruch 2, bei dem das Schutzteil (5) eine Dicke von 0,01 mm bis 1 mm hat.

4. Optischer Aufzeichnungsträger nach einem der vorhergehenden Ansprüche, bei dem das Schutzteil (5) schrumpft, wenn es auf eine Temperatur von 50 °C bis 200 °C erhitzt wird.

5. Optischer Aufzeichnungsträger nach Anspruch 4, bei dem das Schutzteil (5) schrumpft, wenn es auf eine Temperatur von 80 °C bis 170 °C erhitzt wird.

6. Optischer Aufzeichnungsträger nach einem der vorhergehenden Ansprüche, bei dem das Schutzteil (5) eine aufschrumpfbare Folie umfaßt, die durch Reckbehandlung mindestens eines der Materialien Polyvinylchlorid, Polyethylen, Polypropylen, Polystyrol, Polyvinylidenchlorid, Polyester, Kautschukhydrochlorid und Siliconharz erhalten wird.

7. Optischer Aufzeichnungsträger nach einem der vorhergehenden Ansprüche, bei dem auf der Aufzeichnungsschicht (3) des optischen Aufzeichnungsträgers ein schützendes Substrat (4) vorhanden ist.

8. Aufzeichnungsträger nach einem der vorhergehenden Ansprüche, bei dem der erwähnte optische Aufzeichnungsträger eine optische Karte ist.

9. Verfahren zum Schutz eines optischen Aufzeichnungsträgers, das die Schritte der Bedeckung der äußeren Oberfläche des optischen Aufzeichnungsträgers mit einem Schutzteil (5) aus einem aufschrumpfbaren Material und der Erhitzung des Schutzteils (5), damit das erwähnte Schutzteil mit dem optischen Aufzeichnungsträger in enge Berührung gebracht wird, umfaßt.

10. Verfahren nach Anspruch 9, bei dem die Erhitzungstemperatur 50 °C bis 200 °C beträgt.

11. Verfahren nach Anspruch 10, bei dem die Erhitzungstemperatur 80 °C bis 170 °C beträgt.

12. Verfahren nach Anspruch 9, 10 oder 11, bei dem der optische Aufzeichnungsträger eine optische Karte ist.

13. Verfahren nach einem der Ansprüche 9 bis 12, wenn es vor der Aufzeichnung von Daten auf den Träger oder vor der Wiedergabe von Daten aus dem Träger durchgeführt wird.

14. Verfahren nach einem der Ansprüche 9 bis 12, wenn es nach der Aufzeichnung der Daten auf den Träger oder nach der Wiedergabe von Daten aus dem Träger durchgeführt wird.

## Revendications

1. Support d'enregistrement optique, comportant un substrat (2) et une couche (3) d'enregistrement optique, la surface extérieure du support d'enregistrement optique étant recouverte d'un élément protecteur, caractérisé en ce que l'élément protecteur (5) comprend une matière thermorétractable qui peut avoir été soumise à de la chaleur pour être rétractée afin d'amener ledit élément protecteur en contact étroit avec le support d'enregistrement optique.

2. Support d'enregistrement optique selon la revendication 1, dans lequel l'élément protecteur (5) a une épaisseur de 0,01 mm à 5 mm.

3. Support d'enregistrement optique selon la revendication 2, dans lequel l'élément protecteur (5) a une épaisseur de 0,01 mm à 1 mm.

4. Support d'enregistrement optique selon l'une quelconque des revendications précédentes, dans lequel l'élément protecteur (5) subit un retrait lorsqu'il est chauffé à une température de 50°C à 200°C.

5. Support d'enregistrement optique selon la revendication 4, dans lequel l'élément protecteur (5) subit un retrait lorsqu'il est chauffé à une température de 80°C à 170°C.

6. Support d'enregistrement optique selon l'une quelconque des revendications précédentes, dans lequel l'élément protecteur (5) comprend une feuille thermorétractable obtenue par un traitement d'étirage d'au moins l'un des polychlorure de vinyle, polyéthylène, polypropylène, polystyrène, polychlorure de vinylidène, polyester, caoutchouc à l'acide chlorhydrique, résine siliconée.

7. Support d'enregistrement optique selon l'une quelconque des revendications précédentes, dans lequel un substrat protecteur (4) est prévu sur la couche d'enregistrement (3) du support d'enregistrement optique.

8. Support d'enregistrement selon l'une quelconque des revendications précédentes, dans lequel ledit support d'enregistrement optique est une carte optique.

9. Procédé pour protéger un support d'enregistrement optique, qui comprend les étapes consistant à recouvrir la surface extérieure du support d'enregistrement optique avec un élément protecteur (5) en une matière thermorétractable, et à chauffer l'élément protecteur (5) pour amener ledit élément protecteur en contact étroit avec le support d'enregistrement optique.

10. Procédé selon la revendication 9, dans lequel la température de chauffage est de 50°C à 200°C.

11. Procédé selon la revendication 10, dans lequel la température de chauffage est de 80°C à 170°.

12. Procédé selon la revendication 9, 10 ou 11, dans lequel le support d'enregistrement optique est une carte optique.

13. Procédé selon l'une quelconque des revendications 9 à 12, lorsqu'il est mis en oeuvre avant d'enregistrer une information sur le support ou avant de reproduire une information à partir du support.

14. Procédé selon l'une quelconque des revendications 9 à 12, lorsqu'il est mis en oeuvre après l'enregistrement de l'information sur le support ou la reproduction de l'information à partir du support.
